# EUROPÄISCHE PATENTSCHRIFT

(11) **EP 2 534 555 B1**
(45) Veröffentlichungstag und Bekanntmachung des Hinweises auf die Patenterteilung: **17.05.2017**
(21) Anmeldenummer: 11705180.5
(22) Anmeldetag: 08.02.2011
(51) Int. Cl.: G06F 3/01, G06F 3/041, G06F 3/0488

(54) **BEDIENVORRICHTUNG**
OPERATING DEVICE
DISPOSITIF DE COMMANDE

(30) Priorität: 09.02.2010 DE 102010007486
(43) Veröffentlichungstag der Anmeldung: 19.12.2012
(73) Patentinhaber: Continental Automotive GmbH, 30165 Hannover (DE)
(72) Erfinder: ZOLLER, Ingo, 63768 Hösbach (DE); KERN, Thorsten Alexander, 64665 Alsbach (DE)
(86) Internationale Anmeldenummer: PCT/EP2011/051831
(87) Internationale Veröffentlichungsnummer: WO 2011/098453

(56) Entgegenhaltungen:
- WO-A2-2009/130188
- US-A1- 2004 056 745
- US-A1- 2006 119 586
- US-B1- 6 169 469

## Beschreibung

Die Erfindung betrifft eine Bedienvorrichtung mit einem Bedienelement mit haptischer Rückmeldung, wobei das Bedienelement eine Eingabefläche aufweist und von einem Bediener mittels eines Eingabeorgans betätigbar ist.

Haptische Rückmeldungen von Bedienelementen werden vor allen Dingen dann gefordert, wenn ein Bediener den von ihn ausgeführten Bedienvorgang nicht direkt wahrnehmen kann. Während bei Bedienvorrichtungen mit elektromechanischen Schaltern für einen Bediener das Öffnen oder Schließen der Schaltkontakte durch eine sich ändernde Haptik des Bedienelementes wahrnehmbar ist, ist dies bei elektronischen Schaltern nicht notwendigerweise vorhanden. Deshalb sind im Stand der Technik Bedienelemente bekannt, die die mittels für den Bediener wahrnehmbaren Bewegungen des Bedienelementes eine haptische Rückmeldung über einen erfolgten Bedienvorgang geben. Die bekannten haptischen Bedienelemente beispielsweise für sogenannte Touchscreens erfordern einen großen Bauraum, einen aufwändigen Antrieb und besondere konstruktive Maßnahmen, wenn diese beispielsweise in einem Umfeld eingesetzt werden sollen, die von besonders großen Temperaturunterschieden geprägt ist, wie beispielsweise im Kraftfahrzeug, welches sowohl in arktischer Kälte als auch in sommerlicher Hitze seine Funktionsfähigkeit erhalten soll.

Die US 2004 0056745 A1 beschreibt eine haptische Eingabevorrichtung mit haptischer Rückmeldung, bei dem die Eingabefläche senkrecht zu ihrer Oberfläche mittels Elektro- und Permanentmagneten bewegt werden kann. Die WO 2009/130188 A2 beschreibt ein Touchpad mit haptischer Rückmeldung, bei dem die Eingabefläche senkrecht zu ihrer Oberfläche mittels Elektromagneten bewegt werden kann. Die US 6 169 469 B1 beschreibt ein Subminiatur Relais, bei dem bei einer Leiterplatte mit einer Flachspule auf einer ersten Seite der Leiterplatte ein erster Einzelkontakt auf einem ersten ferromagnetischen Bauteil und ein zweiter Einzelkontakt auf einem zweiten ferromagnetischen Bauteil angeordnet ist und auf der zweiten Seite der Leiterplatte ein ferromagnetischer Verbindungsschaltkontakt angeordnet ist. Eine elektrische Verbindung des ersten mit dem zweiten Einzelkontakts kann durch ein Bestromen der Flachspule realisiert werden, die dann den Verbindungsschaltkontakt anzieht. Die US 2006 0119586 A1 beschreibt eine Bedienvorrichtung mit einem Bedienelement mit haptischer Rückmeldung mit den Merkmalen des Oberbegriffs des Anspruch 1. Aufgabe der Erfindung ist es daher, eine Bedienvorrichtung mit einem Bedienelement mit haptischer Rückmeldung anzugeben, welches einen geringen Bauraum benötigt, einfach aufgebaut ist und auch bei schwierigen Umweltbedingung einwandfrei funktioniert.

Diese Aufgabe wird durch eine Bedienvorrichtung mit den Merkmalen des Anspruchs 1 gelöst. Die flächigen Bauteile können beispielsweise eine weitgehend plane Oberfläche aufweisen, die jedoch gegebenenfalls Erhebungen aufweisen können, die entweder als Spulenkern für die Flachspulen vorgesehen sind oder aber dazu dienen, den magnetischen Fluss zu konzentrieren. Durch das Bestromen der Spule wird ein Magnetfeld aufgebaut und die beiden ferromagnetischen Platten werden zueinander gezogen. Diese Bewegung ist für das Eingabeorgan, beispielsweise einen Finger des Bedieners direkt oder über die Koppelungsvorrichtung wahrnehmbar.
Die Flachspule ist besonders einfach und dauerhaft herstellbar, da sie aus Leiterbahnen auf einer Leiterplatte realisiert ist. Dies kann beispielsweise dadurch geschehen, dass eine kupferkaschierte Leiterplatte derart geätzt wird, dass Leiterbahnen in Spulenform übrig bleiben, wobei die Leiterbahnen vorzugsweise spiralförmig angeordnet sind. Es sind aber auch grundsätzlich andere Anordnungen möglich, solange diese Leiterbahnen noch eine ausreichende Induktion aufweisen. Anstelle des Ätzens der Leiterbahnen können die Leiterbahnen beispielsweise auch durch ein Bedrucken von Leiterplatten mit einem Leiterbahnenmaterial wie beispielsweise Silberpaste realisiert werden.

Eine besonders wirkungsvolle Flachspule ist realisierbar, wenn sie auf zwei Seiten der Leiterplatte angeordnet ist. Weiterhin ist es möglich, mehrere Leiterplatten mit Flachspulen übereinander anzuordnen, um eine entsprechend größere Kraftentfaltung zu realisieren.

Wenn die Flachspule einen ferromagnetischen Spulenkern aufweist, wird der von der Flachspule erzeugte magnetische Fluss gerichtet und die Krafteinwirkung zwischen den beiden ferromagnetischen flächigen Bauteilen weiter erhöht.

Besonders einfach ist der Spulenkern zu realisieren, wenn er als Teil eines oder zweier der flächigen ferromagnetischen Bauteile ausgestaltet ist. So wird zum einen kein zusätzliches Bauteil benötigt und zum anderen die Lage der Flachspule fixiert.

Wenn die Bedienvorrichtung mehrere Flachspulen aufweist, kann die Fläche der ferromagnetischen flächigen Bauteile größer gestaltet werden, ohne die Flachspule aufwändiger zu gestalten. Durch die Verwendung von zwei ferromagnetischen flächigen Bauteilen mit einer dazwischen angeordneten Spule ist es prinzipiell möglich, durch ein Bestromen der Flachspule die beiden ferromagnetischen flächigen Bauteile sehr schnell zusammenzuziehen und so einen wahrnehmbaren Eindruck zu hinterlassen. Wenn die Bestromung der Flachspule aufhört, können die beiden ferromagnetischen flächigen Bauteile ihre ursprüngliche Lage beispielsweise durch ein Federelement, welches mit einem der ferromagnetischen flächigen Bauteile verbunden ist, wieder einnehmen. Auch ist es vom Prinzip her möglich, auf ein Federelement zu verzichten, wenn die ursprüngliche Lage beispielsweise durch eine Einwirkung der Schwerkraft auf das bewegliche Teil wiederhergestellt wird.

Wenn die Bedienvorrichtung drei ferromagnetische flächige Bauteile aufweist, wobei benachbarte ferromagnetische flächige Bauteile relativ zueinander bewegbar sind und zwischen den benachbarten ferromagnetischen flächigen Bauteilen jeweils mindestens eine Flachspule angeordnet ist, ist es möglich, die Kraft, die durch die Bestromung der Flachspulen entsteht, in zwei gegeneinander entgegen gesetzten Richtungen auszuüben, beispielsweise gegen die Bewegungsrichtung des Eingabeorgans oder in Bewegungsrichtung des Eingabeorgans, um so verschiedene haptische Eindrücke zu generieren. Ein besonders einfacher Aufbau der vorgenannten Ausgestaltung ist gegeben, wenn das mittlere der ferromagnetischen flächigen Bauteile zwei Erhebungen aufweist, die die Spulenkerne der Flachspulen bilden. So werden die Flachspulen fixiert und gleichzeitig der magnetische Fluss konzentriert.

Wenn die Bedienvorrichtung ein elastisches Element aufweist, welches den Abstand der ferromagnetischen flächigen Bauteile zueinander definiert, wenn die Flachspulen unbestromt sind, kann eine Bedienung des Bedienelementes durch das Eingabeorgan festgestellt werden, wenn die Bedienvorrichtung eine Abstandsvorrichtung zum Messen des Abstandes zweier benachbarter ferromagnetischer flächiger Bauteile aufweist. Wenn hier eine Veränderung des Abstandes gemessen wird, wird davon ausgegangen, dass der Abstand durch das Bedienorgan verändert wurde und so kann eine Bedienung des Bedienelementes festgestellt werden. Diese Messvorrichtung ist mit einfachsten Mitteln dadurch zu realisieren, dass sie als Messeinrichtung zur Messung der Induktivität der Flachspule oder der Flachspulen ausgestaltet ist. Es wird so kein zusätzliches Wegemessmittel benötigt. Vielmehr kann die bereits vorhandene Flachspule durch ein einfaches Messen der Induktivität mittels eines elektronischen Schaltkreises, beispielsweise eines Mikrocomputers, der für die Ansteuerung der Bedienvorrichtung und eventuell sonstiger weiterer Geräte ausgestaltet und schon vorhanden ist, genutzt werden. Der Abstand der ferromagnetischen flächigen Bauteile zueinander kann ebenfalls einfach kapazitiv gemessen werden. Hierzu können beispielsweise auf einer Leiterplatte, auf der die Flachspule oder die Flachspulen angeordnet sind, zwei zusätzliche leitende Flächen angeordnet sein, deren Kapazität sich durch eine Abstandsänderung der ferromagnetischen flächigen Bauteile zu der Leiterplatte ändert und so auf den Abstand der beiden ferromagnetischen flächigen Bauteile geschlossen werden kann. Die beiden leitenden Flächen können gleichzeitig mit der Herstellung der Flachspulen durch Ätzen einer kupferkaschierten Leiterplatte oder Bedrucken mit einer Leitpaste hergestellt werden und erfordern so nur minimalen Mehraufwand. Die Flachspulen können ebenfalls zur Kapazitätsmessung herangezogen werden, solange sie noch unbestromt sind.

Das Bedienelement kann beispielsweise als Anzeige ausgestaltet sein. Diese Anzeige kann im einfachsten Falle beispielsweise aus einer Bedruckung mit verschiedenen Ziffern, beispielsweise in Form einer Telefontastatur, ausgestaltet sein. So können beispielsweise verschiedene Ziffern ausgewählt werden, wenn mit dem Bedienorgan das Bedienelement an der entsprechenden Ziffern berührt wird und die Anzeige eine entsprechende Vorrichtung aufweist, mit der die Position des Eingabeorgans auf der Anzeige bestimmbar ist. Wenn die zuvor beschriebene Anzeige als elektrooptische Anzeige ausgestaltet ist, können verschiedene Menüs, Untermenüs oder Einzelwerte auf der Anzeige dargestellt werden, die dann durch eine entsprechende Berührung der Anzeige an der entsprechenden Position der Darstellung des auszuwählenden Menüs, Untermenüs oder Wertes detektiert wird. Derartige optoelektronische Anzeigen können beispielsweise als Leuchtdiodenmatrix, organische Leuchtdioden Display oder Flüssigkristalldisplay ausgestaltet sein und sind bereits als sogenannte Touchscreens bekannt.

Die Flachspulen werden zum Bewegen der flächigen ferromagnetischen Bauteile zueinander mit einem Gleichstrom oder einem niederfrequenten Wechselstrom bestromt. Zusätzlich kann dieser Strom mit einer Frequenz im Hörbereich, wie beispielsweise 1 Kilohertz moduliert werden, so dass diese Frequenz zusätzlich hörbar ist. So kann ein Klick hörbar dein, der sich anhört, als sei ein elektromechanischer Schalter geöffnet oder geschlossen worden.

Schließlich können die Spulenkerne für die Flachspulen durch eine Verformung der ferromagnetischen flächigen Bauteile realisiert werden, beispielsweise durch Tiefziehen oder -senken. Hierdurch wird die Konstruktion weiter vereinfacht und im Preis reduziert.

Die Erfindung wird nachfolgend anhand der Figuren näher erläutert. Die Figuren zeigen:
- Fig. 1a, 1b:: je eine Darstellung der haptischen Funktion der Bedienvorrichtung,
- Fig. 2:: die Aufsicht auf einer Leiterplatte mit Flachspulen,
- Fig. 3:: den Teilschnitt durch ein erstes Ausführungsbeispiel der Bedienvorrichtung,
- Fig. 4:: eine Explosionszeichnung des Aufbaus zweier ferromagnetischer flächiger Bauteile und einer Leiterplatte mit Flachspulen,
- Fig. 5:: eine weitere Explosionsdarstellung zweier ferromagnetischer flächiger Bauteile und einer Leiterplatte mit Flachspulen,
- Fig. 6:: den Teilschnitt durch ein Ausführungsbeispiel der erfindungsgemäßen Bedienvorrichtung,
- Fig. 7:: ein weiteres Ausführungsbeispiel der erfindungsgemäßen Bedienvorrichtung in einem Teilschnitt,
- Fig. 8:: eine Explosionsdarstellung einer erfindungsgemäßen Bedienvorrichtung.

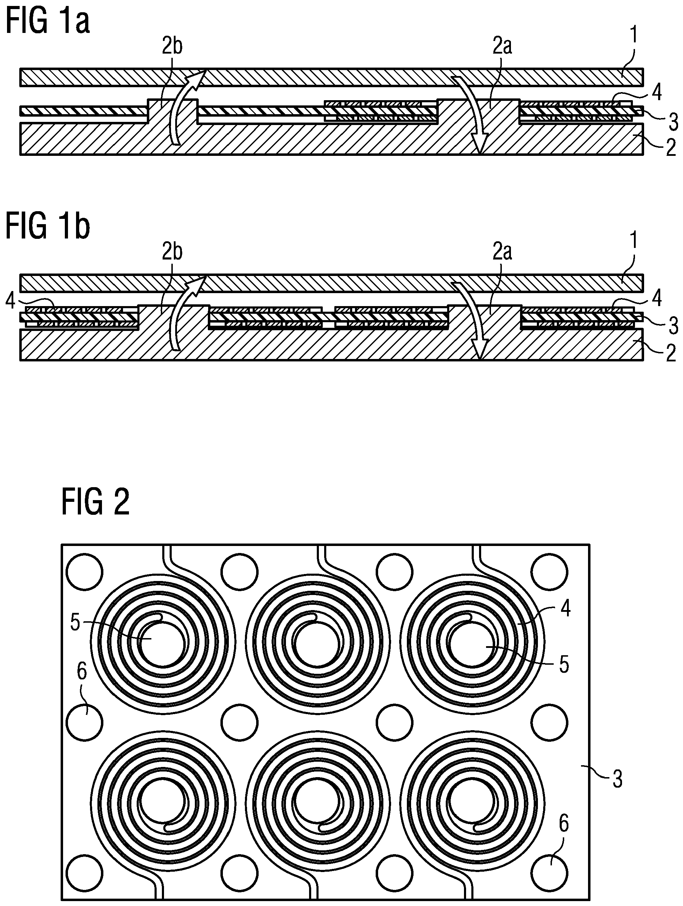

In Fig. 1a erkennt man zwei ferromagnetische flächige Bauteile 1, 2, wobei das ferromagnetische flächige Bauteil 2 zwei Erhebungen 2a, 2b aufweist. Weiterhin erkennt man eine Leiterplatte 3 mit einer Flachspule 4. Die Erhebung 2a dient gleichzeitig als Spulenkern der Flachspule 4. Wenn die Flachspule 4 von einem Strom durchschlossen wird, wird ein magnetischer Fluss, der durch die Pfeile dargestellt wird, in die ferromagnetischen flächigen Bauteile 1 und 2 eingeprägt und so ein magnetischer Kreis geschlossen, so dass die beiden ferromagnetischen flächigen Bauteile 1, 2 zusammengezogen werden.

Fig. 1b unterscheidet sich von der Fig. 1a dadurch, dass zwei Flachspulen 4 vorhanden sind, die nebeneinander auf der Leiterplatte 3 angeordnet sind und dass anstelle der Erhebung 2b eine weitere Erhebung 2a vorhanden ist, die ebenfalls als Spulenkern einer der beiden Flachspulen dient. Damit ein magnetischer Fluss erzeugt wird, wie er durch die Pfeile dargestellt wird, müssen die beiden dargestellten Flachspulen 4 entweder einen unterschiedlichen Wicklungssinn haben oder bei gleichem Wicklungssinn vom Strom in unterschiedlichen Richtungen durchflossen werden.

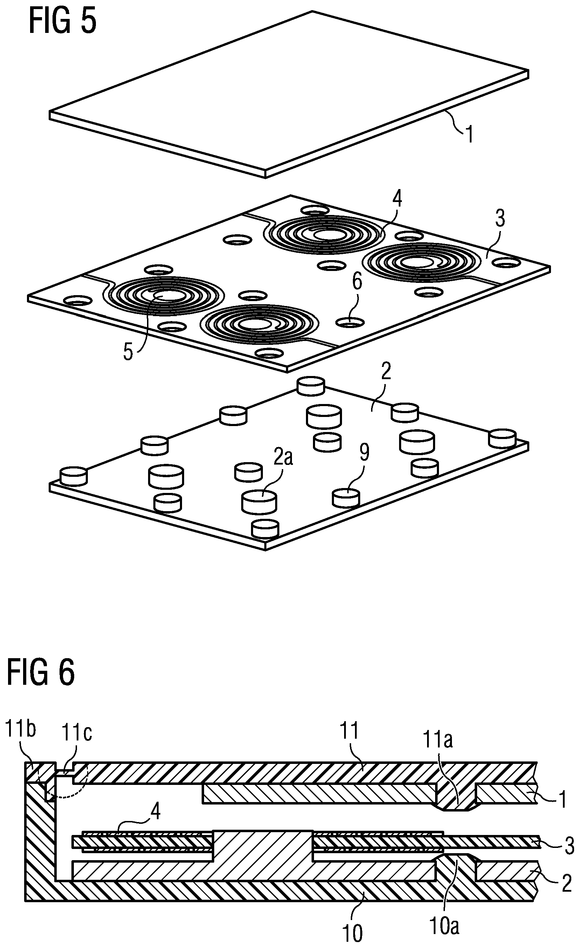

In Fig. 2 erkennt man eine Leiterplatte 3 und sechs Flachspulen 4 und Öffnungen 5 und 6. Die Öffnungen 5 sind innerhalb des Zentrums der Flachspulen angeordnet und dienen zur Aufnahme von Spulenkernen, beispielsweise der Erhebungen 2a aus Fig. 1. Die Öffnungen 6 dienen zur Aufnahme von elastischen Elementen, die später in Zusammenhang mit Fig. 5 näher beschrieben werden. Die Flachspulen 5 sind im vorliegenden Beispiel durch ein Ätzen der ursprünglich voll mit Kupfer kaschierten Leiterplatte 3 entstanden. Es ist auch möglich, beispielsweise diese Flachspulen durch ein Bedrucken einer Leiterplatte mit einer Leitpaste herzustellen. Die Form der Spulen 4 muss nicht unbedingt der dargestellten Spiralform entsprechen. Es ist beispielsweise auch möglich, die Spule rechteckig mäanderförmig oder elliptisch zu realisieren, doch die dargestellte spiralförmige Anordnung wird bevorzugt.

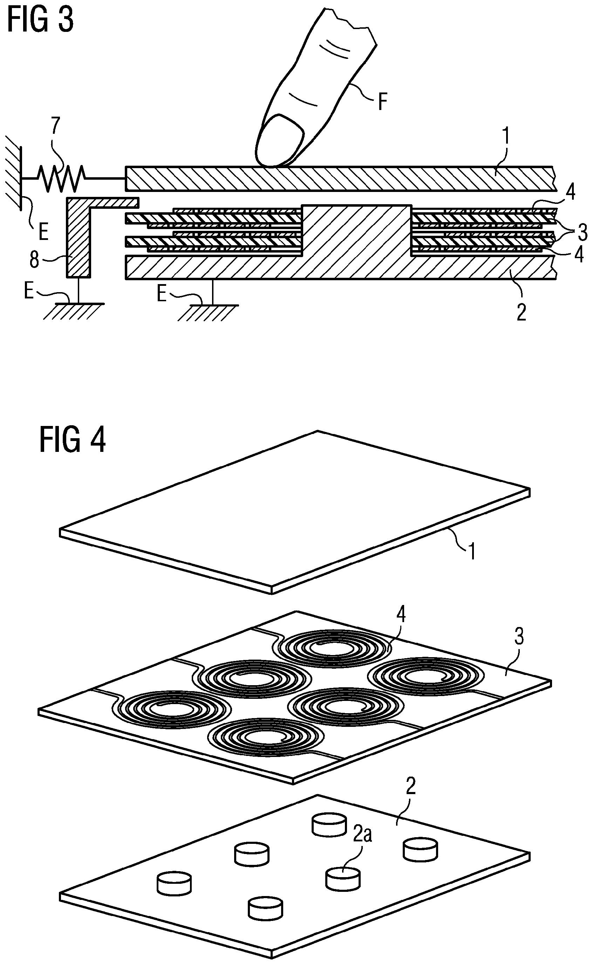

Der Teilschnitt durch eine erfindungsgemäße Bedienvorrichtung in Fig. 3 zeigt zwei ferromagnetische flächige Bauteile 1, 2, zwei Leiterplatten 3 mit jeweils einer Flachspule 4, ein Federelement 7 und einen Anschlag 8. Weiterhin erkennt man Erdzeichen E und einen Finger F als Eingabeorgan eines möglichen Bedieners. Somit stellt im vorliegenden Beispiel das ferromagnetische flächige Bauteil gleichzeitig die Eingabefläche des Bedienelementes dar. Die Erdzeichen E an den Bauelementen 2, 7 und 8 bedeuten, dass diese eine feste definierte Position einnehmen. Das Federelement 7 hält ohne äußere Krafteinwirkung das ferromagnetische flächige Bauteil in einer definierten Position. Wenn nun erkannt wird, dass der Finger das ferromagnetische flächige Bauteil 1 oder ein mit dem ferromagnetischen flächigen Bauteil 1 gekoppeltes Bedienelement wie beispielsweise eine Anzeige berührt, werden die Flachspulen 4 bestromt, so dass das ferromagnetische flächige Bauteil 1 in Richtung des flächigen ferromagnetischen Bauteils 2 gezogen wird. Der Anschlag 8 verhindert, dass sich die beiden ferromagnetischen flächigen Bauteile berühren. Die Erkennung eines Bedienorgans kann beispielsweise dadurch erfolgen, dass der Abstand zwischen den beiden ferromagnetischen flächigen Bauteilen 1, 2 mittels einer Messvorrichtung gemessen wird und bei einer Verringerung des Abstandes eine Berührung detektiert wird. Eine derartige Abstandsmesseinrichtung ist aber nicht unbedingt erforderlich. Beispielsweise ist es auch möglich, dass das Bedienelement als sogenannter Touchscreen ausgestaltet ist, der mit dem ferromagnetischen flächigen Bauteil 1 verbunden ist, beispielsweise dadurch, dass er direkt oberhalb des ferromagnetischen flächigen Bauteils angeordnet ist. Derartige Touchscreens verfügen über eine Detektionsvorrichtung, mit der festgestellt wird, an welcher Stelle des Touchscreens ein Bedienorgan den Touchscreen berührt und so auch eine Berührung des Bedienelementes insgesamt festgestellt werden kann.

Die zwei Flachspulen 4 erhöhen die Krafteinwirkung auf das ferromagnetische flächige Bauteil 1, so dass ein besonders intensiver haptischer Eindruck vermittelt werden kann.

Die Explosionsdarstellung in Fig. 4 zeigt ein ferromagnetisches flächiges Bauteil 1, ein ferromagnetisches flächiges Bauteil 2 mit sechs Erhebungen 2a und eine Leiterplatte 3 mit sechs Flachspulen 4. Die Erhebungen 2a dienen als Spulenkerne der Flachspulen 4.

Bei der Explosionsdarstellung in Fig. 5 erkennt man ein ferromagnetisches flächiges Bauteil 1, ein ferromagnetisches flächiges Bauteil 2 mit Erhebungen 2a und elastischen Elementen 9. Die elastischen Elemente 9 sind beispielsweise als Silikonzylinder ausgestaltet und wirken so als Federelement und als Anschlag, da sie nur in gewissem Umfang komprimiert werden können. Diese elastischen Elemente sind im Zusammenbau durch die Öffnungen 6 der Leiterplatte 3 geführt, so dass das ferromagnetische flächige Bauteil 1 auf diesen elastischen Elementen im zusammengebauten Zustand aufliegt. Die elastischen Elemente 9 können beispielsweise auch kegelförmig, pyramidenförmig, quaderförmig oder als eine ähnlich räumliche Figur aus einem elastischen Werkstoff, beispielsweise Silikon, ausgestaltet sein.

In Fig. 6 sieht man eine weitere Ausgestaltung einer erfindungsgemäßen Bedienvorrichtung. Man erkennt neben den ferromagnetsichen flächigen Bauteilen 1 und 2 und der Leiterplatte 3 mit der Flachspule 4 eine Gehäuseunterseite 10 und einen Gehäusedeckel 11. Die Gehäuseunterseite 10 ist dadurch hergestellt, dass das ferromagnetische flächige Bauteil 2 mit der Gehäuseunterseite teilumspritzt ist in der Art, dass die nietförmige Erhöhung 10a durch eine Öffnung des ferromagnetischen flächigen Bauteils 1 gespritzt ist und so das ferromagnetische flächige Bauteil mit der Gehäuseunterseite 10 verbunden ist. In ähnlicher Form ist der Gehäusedeckel 11 mit einer nietförmigen Erhebung 11a mit dem ferromagnetischen flächigen Bauteil 1 verbunden bzw. gekoppelt. Der Gehäusedeckel 11 weist weiterhin einen Gehäusedeckelrahmen 11b auf, der über eine Gehäusedeckelverjüngung 11c mit dem übrigen Teil des Gehäusedeckels 11 verbunden ist. Die Gehäusedeckelverjüngung 11c dient als Federelement, die den Gehäusedeckel 11 in einer definierten Position hält, solange die Flachspule 4 nicht bestromt ist.

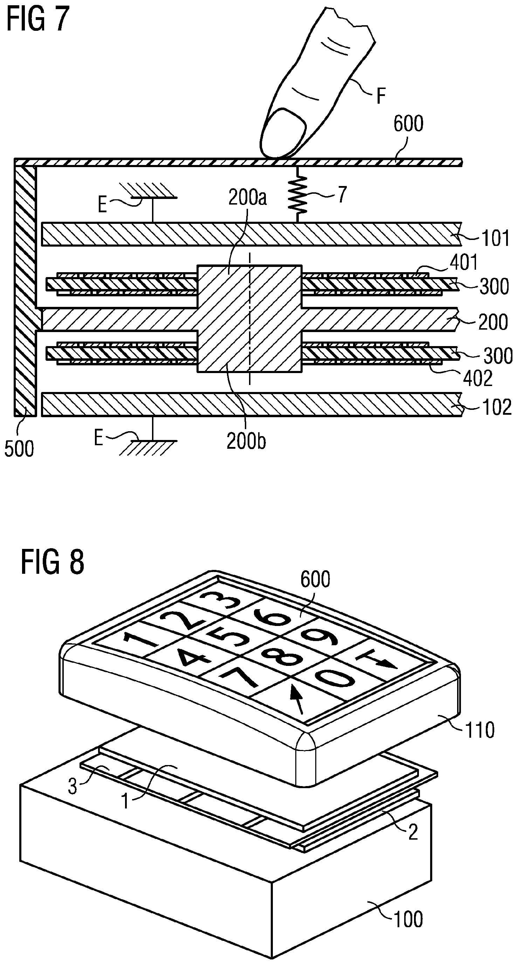

Der Teilschnitt der Bedienvorrichtung in Fig. 7 zeigt ferromagnetische flächige Bauteile 101, 102, 200, Leiterplatten 300 mit Flachspulen 401, 402, eine Koppelungsvorrichtung 500 und ein Bedienelement in Form eines Touchscreens 600, ein Federelement 7 und einen Finger F eines Bedieners. Das ferromagnetische flächige Bauteil 200 weist Erhebungen 200a, 200b auf, die als Spulenkerne der Flachspulen 401, 402 dienen.

Die Erdzeichen E bedeuten wieder wie in Fig. 3, dass die mit den Erdzeichen E verbundenen Bauteile (hier die ferromagnetischen flächigen Bauteile 101, 102) eine feste definierte Position einnehmen.
Wenn die Spule 401 bestromt wird, wird das ferromagnetische flächige Bauteil 200 in Richtung des ferromagnetischen flächigen Bauteils 101 gezogen, so dass über die Koppelungsvorrichtung 500 der Touchscreen 600 angehoben wird und sich so der Druck auf den Finger F erhöht. Wenn die Flachspule 402 bestromt wird, wird das ferromagnetische flächige Bauteil 200 in Richtung des ferromagnetischen flächigen Bauteils 102 gezogen, so dass sich der Touchscreen 600 von dem Finger F entfernt, so dass der Druck auf den Finger F reduziert wird. Der Touchscreen 600 enthält eine Detektiervorrichtung, die das Vorhandensein des Fingers F detektiert. Dann kann, je nachdem, welcher haptischer Eindruck gewünscht wird, die Spule 401 oder 402 bestromt werden. Auch ist es möglich, die Spulen 401, 402 abwechselnd zu bestromen, um so eine abwechselnde Auf- und Abwärtsbewegung des Touchscreens 600 zu generieren. So sind sehr viele unterschiedliche haptische Wahrnehmungsmuster je nach Bestromung der Spulen 401, 402 realisierbar.

In Fig. 8 erkennt man die teilweise Explosionsdarstellung eines Ausführungsbeispiels einer erfindungsgemäßen Bedienvorrichtung. Man erkennt eine Gehäuseunterseite 100, einen Gehäusedeckel 110 mit einem Touchscreen 600 und zwischen der Gehäuseunterseite 100 und dem Gehäusedeckel 110 ein ferromagnetisches flächiges Bauteil 1, eine Leiterplatte 3 und ein ferromagnetisches flächiges Bauteil 2. Anstelle der ferromagnetischen flächigen Bauteile 1, 2 und der Leiterplatte 3 kann auch ein System, wie in Fig. 7 beschrieben, verwendet werden. Auf dem Touchscreen 600 ist eine Zehnertastatur dargestellt. Da der Touchscreen 600 eine optoelektronische Anzeige aufweist, kann anstelle der dargestellten Zehnertastatur natürlich jedes darstellbare Symbol, Menü oder Untermenü nacheinander dargestellt werden. Zu verschiedenen Darstellungen und Auswahlmöglichkeiten können auch unterschiedliche haptische Effekte generiert werden. So kann beispielsweise die Amplitude des Stroms und/oder die Frequenz der Einschaltung der Flachspulen 401, 402 verändert werden.

## Patentansprüche

1. Bedienvorrichtung mit einem Bedienelement mit haptischer Rückmeldung, wobei das Bedienelement eine Eingabefläche aufweist und von einem Bediener mittels eines Eingabeorgans betätigbar ist, wobei die Bedienvorrichtung zwei ferromagnetische flächige Bauteile (1, 2, 101, 102, 200) und eine Spule (4, 401, 402) aufweist, wobei die ferromagnetischen flächigen Bauteile (1, 2, 101, 102, 200) mit ihren größten Flächen zueinander ausgerichtet sind und relativ zueinander bewegbar sind und wobei die Spule (4, 401, 402) zwischen den ferromagnetischen Bauteilen (1, 2, 101, 102, 200) angeordnet ist, wobei die Eingabefläche entweder als Teil eines der ferromagnetischen flächigen Bauteile (1) ausgestaltet oder mittels einer Koppelungsvorrichtung (11a, 500) mit einem der ferromagnetischen flächigen Bauteile (1, 200) gekoppelt ist, wobei die ferromagnetischen flächigen Bauteile (1, 2, 101, 102, 200) durch ein Bestromen der Spule (4, 401, 402) zueinander bewegbar sind und die Bewegung eines der ferromagnetischen flächigen Bauteile (1, 2, 101, 102, 200) direkt oder mittels der Koppelungsvorrichtung (500, 11a) für den Tastsinn des Bedieners an dem Bedienelement (600) wahrnehmbar ist, **dadurch gekennzeichnet, dass** die Spule (4, 401, 402) als Flachspule ausgestaltet ist und wobei die Flachspule (4, 401, 402) aus Leiterbahnen auf einer Leiterplatte (3, 300) realisiert ist.

2. Bedienvorrichtung nach Anspruch 1, **dadurch gekennzeichnet, dass** die Flachspule (4, 401, 402) auf zwei Seiten der Leiterplatte (3, 300) angeordnet ist.

3. Bedienvorrichtung nach einem der vorstehenden Ansprüche, **dadurch gekennzeichnet, dass** die Flachspule (4, 401, 402) einen ferromagnetischen Spulenkern aufweist.

4. Bedienvorrichtung nach Anspruch 3, **dadurch gekennzeichnet, dass** der Spulenkern (2a, 2b, 200a, 200b) als Teil eines oder zwei der ferromagnetischen flächigen Bauteile (1, 2, 101, 102, 200) ausgestaltet ist.

5. Bedienvorrichtung nach einem der vorstehenden Ansprüche, **dadurch gekennzeichnet, dass** sie mehrere Flachspulen (4, 401, 402) aufweist.

6. Bedienvorrichtung nach einem der vorstehenden Ansprüche, **dadurch gekennzeichnet, dass** die Bedienvorrichtung drei ferromagnetische flächige Bauteile (101, 102, 200) aufweist, wobei benachbarte ferromagnetische flächige Bauteile relativ zueinander bewegbar sind und zwischen den benachbarten ferromagnetischen flächigen Bauteilen (101, 102, 200) jeweils mindestens eine Flachspule (401, 402) angeordnet ist.

7. Bedienvorrichtung nach Anspruch 6, **dadurch gekennzeichnet, dass** das mittlere der ferromagnetischen flächigen Bauteile (101, 102, 200) zwei Erhebungen (200a, 200b) aufweist, die die Spulenkerne der Flachspulen (401, 402) bilden.

8. Bedienvorrichtung nach einem der vorstehenden Ansprüche, **dadurch gekennzeichnet, dass** sie ein elastisches Element (7, 9) aufweist, welches den Abstand der ferromagnetischen flächigen Bauteile (1, 2, 101, 102, 200) zueinander definiert, wenn die Flachspulen (4, 401, 402) unbestromt sind.

9. Bedienvorrichtung nach einem der vorstehenden Ansprüche, **dadurch gekennzeichnet, dass** sie eine Abstandsmessvorrichtung zum Messen des Abstandes zweier benachbarter ferromagnetischer flächiger Bauteile (1, 2, 101, 102, 200) aufweist.

10. Bedienvorrichtung nach Anspruch 9, **dadurch gekennzeichnet, dass** die Messvorrichtung zur Messung der Änderung der Induktivität der Flachspule (4) oder der Flachspulen (401, 402) ausgestaltet ist.

11. Bedienvorrichtung nach einem der vorstehenden Ansprüche, **dadurch gekennzeichnet, dass** das Bedienelement als Anzeige (600) ausgestaltet ist.

12. Bedienvorrichtung nach Anspruch 11, **dadurch gekennzeichnet, dass** die Anzeige (600) eine Vorrichtung aufweist, mit der die Position des Eingabeorgans auf der Anzeige bestimmbar ist.

13. Bedienvorrichtung nach Anspruch 12, **dadurch gekennzeichnet, dass** die Anzeige (600) als elektrooptische Anzeige ausgestaltet ist.

14. Bedienvorrichtung nach einem der vorstehenden Ansprüche, **dadurch gekennzeichnet, dass** die Flachspule (4, 401, 402) bzw. die Flachspulen (4, 401, 402) mit einem im Hörfrequenzbereich modulierten Strom beaufschlagbar ist bzw. sind.

15. Bedienvorrichtung nach einem der Ansprüche 3 bis 14, **dadurch gekennzeichnet, dass** der ferromagnetische Spulenkern bzw. die ferromagnetischen Spulenkerne durch eine Verformung der ferromagnetischen flächigen Bauteile (2, 200) hergestellt ist bzw. sind.

## Claims

1. Operating device having an operating element with haptic feedback, wherein the operating element has an input surface and can be actuated by an operator by means of an input member, wherein the operating device has two ferromagnetic planar components (1, 2, 101, 102, 200) and a coil (4, 401, 402), wherein the largest surfaces of the ferromagnetic planar components (1, 2, 101, 102, 200) are oriented with respect to one another and can be moved relative to one another, and wherein the coil (4, 401, 402) is disposed between the ferromagnetic components (1, 2, 101, 102, 200), wherein the input surface is configured either as part of one of the ferromagnetic planar components (1) or is coupled by means of a coupling device (11a, 500) to one of the ferromagnetic planar components (1, 200), wherein the ferromagnetic planar components (1, 2, 101, 102, 200) can be moved with respect to one another by energizing the coil (4, 401, 402), and the movement of one of the ferromagnetic planar components (1, 2, 101, 102, 200) is perceptible to the tactile sense of the operator on the operating element (600) either directly or by means of the coupling device (500, 11a), **characterized in that** the coil (4, 401, 402) is configured as a flat coil and wherein the flat coil (4, 401, 402) is implemented from conductor tracks on a printed circuit board (3, 300).

2. Operating device according to Claim 1, **characterized in that** the flat coil (4, 401, 402) is disposed on two sides of the printed circuit board (3, 300).

3. Operating device according to one of the preceding claims, **characterized in that** the flat coil (4, 401, 402) has a ferromagnetic coil core.

4. Operating device according to Claim 3, **characterized in that** the coil core (2a, 2b, 200a, 200b) is configured as part of one or two of the ferromagnetic planar components (1, 2, 101, 102, 200).

5. Operating device according to one of the preceding claims, **characterized in that** said operating device has a plurality of flat coils (4, 401, 402).

6. Operating device according to one of the preceding claims, **characterized in that** the operating device has three ferromagnetic planar components (101, 102, 200), wherein adjacent ferromagnetic planar components can be moved relative to one another and in each case at least one flat coil (401, 402) is disposed between the adjacent ferromagnetic planar components (101, 102, 200).

7. Operating device according to Claim 6, **characterized in that** the middle ferromagnetic planar component of the ferromagnetic planar components (101, 102, 200) has two elevated portions (200a, 200b) which form the coil cores of the flat coils (401, 402).

8. Operating device according to one of the preceding claims, **characterized in that** said operating device has an elastic element (7, 9) which defines the distance between the ferromagnetic planar components (1, 2, 101, 102, 200) when the flat coils (4, 401, 402) are not energized.

9. Operating device according to one of the preceding claims, **characterized in that** said operating device has a distance-measuring device for measuring the distance between two adjacent ferromagnetic planar components (1, 2, 101, 102, 200).

10. Operating device according to Claim 9, **characterized in that** the measuring device is configured to measure the change in the inductance of the flat coil (4) or of the flat coils (401, 402).

11. Operating device according to one of the preceding claims, **characterized in that** the operating element is configured as a display (600).

12. Operating device according to Claim 11, **characterized in that** the display (600) has a device with which the position of the input member on the display can be determined.

13. Operating device according to Claim 12, **characterized in that** the display (600) is configured as an electro-optical display.

14. Operating device according to one of the preceding claims, **characterized in that** a current which is modulated in the audible frequency range can be applied to the flat coil (4, 401, 402) or the flat coils (4, 401, 402).

15. Operating device according to one of Claims 3 to 14, **characterized in that** the ferromagnetic coil core or the ferromagnetic coil cores is/are manufactured by shaping the ferromagnetic planar components (2, 200).

## Revendications

1. Dispositif de commande avec un élément de commande avec retour haptique, l'élément de commande comportant une surface de saisie et pouvant être actionné par un utilisateur à l'aide d'un organe de saisie, le dispositif de commande comportant deux composants (1, 2, 101, 102, 200) plats ferromagnétiques et une bobine (4, 401, 402), les composants (1, 2, 101, 102, 200) plats ferromagnétiques étant orientés les uns vers les autres avec leurs plus grandes surfaces et pouvant être déplacés les uns par rapport aux autres et la bobine (4, 401, 402) étant disposée entre les composants (1, 2, 101, 102, 200) ferromagnétiques, la surface de saisie étant configurée soit comme faisant partie d'un des composants (1) plans ferromagnétiques ou étant couplée au moyen d'un dispositif de couplage (11a, 500) à un des composants (1, 200) plans ferromagnétiques, les composants (1, 2, 101, 102, 200) plans ferromagnétiques pouvant être déplacés les uns par rapport aux autres par alimentation de la bobine (4, 401, 402) et le mouvement d'un des composants (1, 2, 101, 102, 200) plans ferromagnétiques étant perceptible directement ou à l'aide du dispositif de couplage (500, 11a) pour le sens du toucher de l'utilisateur au niveau de l'élément de commande (600), **caractérisé en ce que** la bobine (4, 401, 402) est configurée sous la forme d'une bobine plate et la bobine plate (4, 401, 402) étant réalisée sous la forme de pistes conductrices sur une plaque conductrice (3, 300).

2. Dispositif de commande selon la revendication 1, **caractérisé en ce que** la bobine plate (4, 401, 402) est disposée sur deux côtés de la plaque conductrice (3, 300).

3. Dispositif de commande selon l'une quelconque des revendications précédentes, **caractérisé en ce que** la bobine plate (4, 401, 402) comporte un noyau de bobine ferromagnétique.

4. Dispositif de commande selon la revendication 3, **caractérisé en ce que** le noyau de bobine (2a, 2b, 200a, 200b) est configuré comme faisant partie d'un ou deux des composants (1, 2, 101, 102, 200) plans ferromagnétiques.

5. Dispositif de commande selon l'une quelconque des revendications précédentes, **caractérisé en ce qu'**il comporte plusieurs bobines plates (4, 401, 402).

6. Dispositif de commande selon l'une quelconque des revendications précédentes, **caractérisé en ce que** le dispositif de commande comporte trois composants (101, 102, 200) plans ferromagnétiques, les composants plans ferromagnétiques connexes pouvant être déplacés les uns par rapport aux autres et respectivement au moins une bobine plate (401, 402) étant disposée entre les composants (101, 102, 200) plans ferromagnétiques connexes.

7. Dispositif de commande selon la revendication 6, **caractérisé en ce que** le composant central des composants (101, 102, 200) plans ferromagnétiques comporte deux éminences (200a, 200b) formant les noyaux de bobine des bobines plates (401, 402).

8. Dispositif de commande selon l'une quelconque des revendications précédentes, **caractérisé en ce qu'**il comporte un élément élastique (7, 9) définissant l'écartement des composants (1, 2, 101, 102, 200) plans ferromagnétiques les uns par rapport aux autres lorsque les bobines plates (4, 401, 402) ne sont pas alimentées.

9. Dispositif de commande selon l'une quelconque des revendications précédentes, **caractérisé en ce qu'**il comporte un dispositif de mesure d'écartement pour mesurer l'écartement de deux composants (1, 2, 101, 102, 200) plans ferromagnétiques connexes.

10. Dispositif de commande selon la revendication 9, **caractérisé en ce que** le dispositif de mesure est configuré pour mesurer la variation de l'inductivité de la bobine plate (4) ou des bobines plates (401, 402).

11. Dispositif de commande selon l'une quelconque des revendications précédentes, **caractérisé en ce que** l'élément de commande est configuré sous la forme d'un affichage (600).

12. Dispositif de commande selon la revendication 11, **caractérisé en ce que** l'affichage (600) comporte un dispositif avec lequel la position de l'organe de saisie peut être définie sur l'affichage.

13. Dispositif de commande selon la revendication 12, **caractérisé en ce que** l'affichage (600) est configuré sous la forme d'un affichage électrooptique.

14. Dispositif de commande selon l'une quelconque des revendications précédentes, **caractérisé en ce que** la bobine plate (4, 401, 402) et/ou les bobines plates (4, 401, 402) peuvent être alimentées avec un courant modulé dans la plage des fréquences audibles.

15. Dispositif de commande selon l'une quelconque des revendications 3 à 14, **caractérisé en ce que** le noyau de bobine ferromagnétique et/ou les noyaux de bobine ferromagnétiques est et/ou sont fabriqués par une déformation des composants (2, 200) plans ferromagnétiques.
